(19) Europäisches Patentamt

European Patent Office

Office européen des brevets

(11) Numéro de publication: **0 270 410 B1**

# (12) FASCICULE DE BREVET EUROPEEN

(45) Date de publication de fascicule du brevet: **06.05.92**

(51) Int. Cl.⁵: **G11C 16/02**, G06F 1/00, G06K 19/00, G07F 7/00

(21) Numéro de dépôt: **87402470.6**

(22) Date de dépôt: **03.11.87**

(54) **Circuit intégré du type circuit logique comportant une mémoire non volatile programmable électriquement.**

(30) Priorité: **04.11.86 FR 8615325**

(43) Date de publication de la demande:
**08.06.88 Bulletin 88/23**

(45) Mention de la délivrance du brevet:
**06.05.92 Bulletin 92/19**

(84) Etats contractants désignés:
**DE ES FR GB IT**

(56) Documents cités:
**WO-A-83/01848**
**WO-A-84/03011**

(73) Titulaire: **SGS-THOMSON MICROELECTRO-NICS S.A.**
**7, Avenue Galliéni**
**F-94250 Gentilly(FR)**

(72) Inventeur: **Marquot, Alexis**
**THOMSON-CSF SCPI 19, avenue de Messine**
**F-75008 Paris(FR)**

(74) Mandataire: **Schmit, Christian Norbert Marie et al**
**Cabinet Ballot-Schmit 7, rue Le Sueur**
**F-75116 Paris(FR)**

## Description

La présente invention concerne un circuit intégré du type circuit logique comportant une mémoire non volatile programmable électriquement. Elle concerne plus particulièrement un circuit intégré dans lequel la mémoire non volatile programmable électriquement est constituée par une mémoire de type EPROM ou EEPROM. De tels circuits sont utilisés, par exemple, dans les cartes à mémoire appelées aussi cartes CCC. Dans ce cas, les mémoires non volatiles sont le plus souvent destinées à recevoir des informations confidentielles non modifiables qui ne doivent pas être soumis à des programmations parasites dues à des conditions anormales de fonctionnement de la carte.

Or, dans les mémoires de type EPROM ou EEPROM actuellement disponibles sur le marché, chaque élément de stockage d'informations ou cellule-mémoire est constitué par un transistor MOS à grille flottante. Ce type de transistor peut avoir deux états. Ainsi, dans le cas d'un transistor à canal N, dans un premier état, aucune charge n'est piégée sur la grille flottante. Un canal de conduction peut exister entre source et drain. Le transistor conduit alors et se comporte comme un interrupteur fermé. Dans un deuxième état, les électrons ont été piégés sur la grille flottante. Ils empêchent la création d'un canal de conduction dans le substrat entre source et drain. Dans ce cas, le transistor est bloqué et se comporte comme un interrupteur ouvert.

Pour programmer ou lire un transistor MOS à grille flottante, différentes tensions doivent pouvoir être appliquées sur les différentes électrodes du transistor. Ces tensions sont appliquées à l'aide de circuits d'écriture et de lecture commandés par des signaux spécifiques.

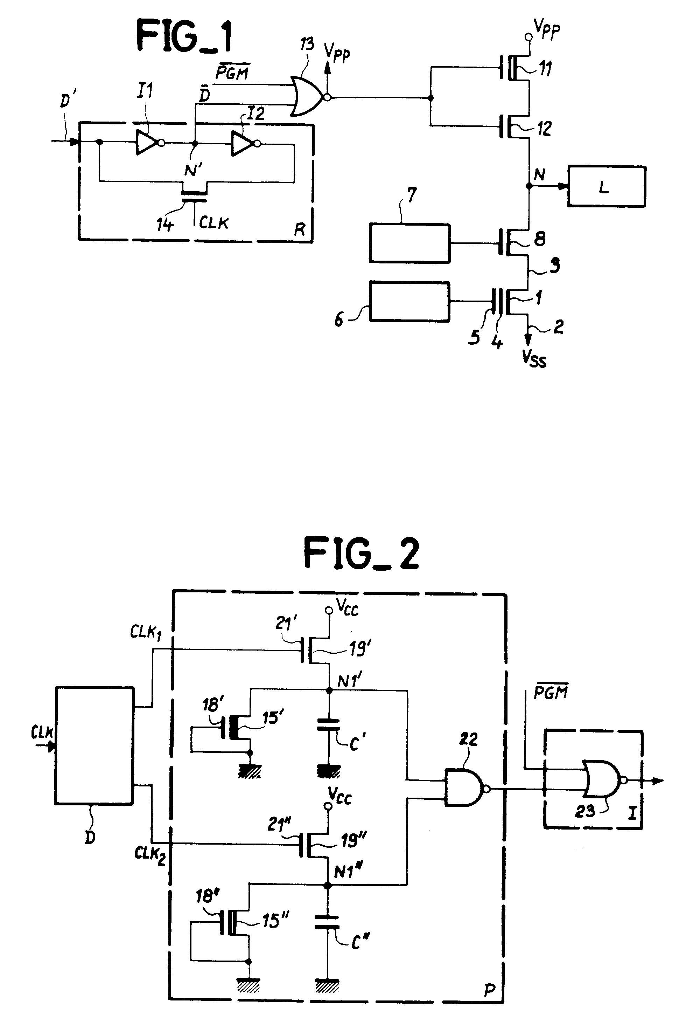

Ainsi, comme représenté sur la figure 1 qui concerne une mémoire EPROM dont la cellule-mémoire est constituée par un transistor à grille flottante de type SAMOS (pour stacked gate avalanche injection MOS), chaque transistor à grille flottante 1 comporte deux électrodes principales respectivement 2 et 3 et une grille de commande 5 empilée sur la grille flottante 4. Dans le cas d'une mémoire, les transistors à grille flottante 1 constituant les cellules-mémoire sont connectés sous forme matricielle. Ainsi, une première électrode principale 2 ou source dans la technologie utilisée, est reliée à la tension Vss correspondant à la masse tandis que l'autre électrode 3 ou drain est reliée par l'intermédiaire d'une ligne de bits non représentée et d'un transistor MOS 8 formant interrupteur à un décodeur d'adresse de colonne 7. La grille de commande 5 est reliée par l'intermédiaire d'une autre connexion dite ligne de mots non représentée à un décodeur d'adresse de ligne 6.

De manière plus spécifique, le décodeur d'adresse de colonne 7 est relié à la grille du transistor 8 dont la source est reliée à l'électrode 3 du transistor MOS 1 à grille flottante, tandis que son autre électrode ou drain est reliée par l'intermédiaire d'une ligne de charge constituée des transistors MOS 11 et 12 à la tension de programmation Vpp. En fait, la ligne de charge est constituée d'un transistor MOS 11 déplété dont le drain est relié à Vpp et la source connectée au drain d'un transistor MOS 12 enrichi, les deux grilles des transistors 11 et 12 étant connectées ensemble et reliées à un circuit de commande d'écriture constitué par une porte NI 13 alimentée à la tension Vpp. La porte NI 13 reçoit en entrée respectivement le signal de commande de programmation inversé $\overline{PGM}$ et la donnée à programmer inversée $\overline{D}$. Le signal $\overline{D}$ est issu d'un registre dynamique R de type connu. Ce registre R permet de réaliser le stockage et le rafraîchissement des données. De manière plus spécifique, il reçoit sur son entrée les données à écrire sous forme de niveau logique "1" ou "0". Il comporte essentiellement des moyens de stockage constitués par des capcités non représentées prévues devant deux inverseurs I1 et I2 et un transistor MOS 14 formant interrupteur connecté entre la sortie de l'inverseur I2 et l'entrée de l'inverseur I1. Ce transistor est commandé par le signal CLK représentant le signal horloge de la mémoire. Ce transistor MOS 14 est utilisé pour réaliser le rafraîchissement des données. Ainsi, en sortie de l'inverseur I1, à savoir au noeud N′, on obtient la donnée $\overline{D}$ qui est envoyée en entrée de la porte NI 13.

D'autre part, le noeud N entre la source du transistor MOS 12 et le drain du transistor MOS 8 est connecté à un amplificateur de lecture représenté par le bloc L.

Le circuit d'écriture décrit ci-dessus a un fonctionnement essentiellement dynamique. Ainsi, la donnée D en entrée du registre R est stockée sous forme de charge sur un noeud haute impédance, et ce stockage est rafraîchi périodiquement en utilisant le signal horloge CLK. Si ce stockage n'est pas rafraîchi, la donnée D est perdue et le circuit d'écriture a un comportement totalement imprévisible. Or, dans le cas où le circuit intégré est utilisé dans des cartes à mémoire par exemple, certaines zones de la mémoire non volatile sont réservées, c'est-à-dire que leur écriture est strictement contrôlée et le plus souvent soumise à la reconnaissance d'un code secret. Cependant, avec le circuit d'écriture décrit ci-dessus, si l'utilisateur envoie des implusions sur l'alimentation en tension de programmation Vpp, alors que la tension Vcc est présente, mais que le signal horloge CLK est absent, on observe des programmations parasites dans la mémoire non volatile et cela même dans les zones réservées. Les zones réservées sont alors programmées de manière tout à fait aléatoire.

La présente invention a pour but de remédier à ces inconvénients permettant une écriture non contrôlée dans une mémoire non volatile programmable électriquement.

En conséquence, la présente invention a pour objet un circuit intégré du type circuit logique comportant une mémoire non volatile programmable électriquement constituée d'une matrice de cellules-mémoire du type à transistor à grille flottante, de circuits d'écriture et de lecture et de moyens gérant l'interconnexion de ces circuits avec la mémoire, le circuit intégré recevant une tension d'alimentation générale Vcc, une tension de programmation Vpp et un signal-horloge extérieur agissant entre autre sur le fonctionnement des circuits d'écriture, caractérisé en ce que le signal-horloge extérieur est divisé en deux signaux-horloge internes complémentaires, le circuit intégré comportant de plus un circuit de détection de présence des signaux-horloge internes envoyant un signal interdisant l'écriture dans la mémoire lorsqu'il détecte l'absence d'un des signaux-horloge internes, le circuit (P) de détection étant constitué d'un premier circuit comportant une capacité (C') et une résistance (15') montées en parallèle entre la masse et un noeud commun (N1'), la capacité étant régulièrement chargée par l'intermédiaire d'un (CLK1) des deux signaux-horloge internes et d'un deuxième circuit comportant une capacité (C") et une résistance (15") montées en parallèle entre la masse et un noeud commun (N1"), la capacité (C") étant régulièrement chargée par l'intermédiaire de l'autre signal-horloge interne (CLK2), les noeuds communs étant reliés respectivement à chaque entrée d'une porte logique (22) dont la sortie fournit un signal logique de présence ou d'absence des signaux-horloge.

Selon un mode de réalisation préférentiel, la porte logique est de type NON-ET.

De préférence, la sortie du circuit de détection est connectée sur l'entrée d'une porte dont l'autre entrée reçoit un signal essentiel à la commande d'écriture de manière à bloquer l'écriture si le signal-horloge externe est absent.

D'autres caractéristiques et avantages de la présente invention apparaîtront à la lecture de la description de différents modes de réalisation faite ci-après avec référence aux dessins ci-annexés dans lesquels :

- la figure 1, déjà décrite, représente schématiquement une cellule-mémoire d'une mémoire EPROM connectée à ses circuits d'écriture et de lecture ainsi qu'aux moyens gérant l'interconnexion entre la cellule-mémoire et les circuits d'écriture et de lecture, et

- la figure 2 représente schématiquement un mode de réalisation d'un circuit de détection conforme à la présente invention.

Pour simplifier la description, dans les dessins les mêmes éléments portent les mêmes références. D'autre part, la description a été faite en se référant à des circuits MOS réalisés en technologie NMOS et à une mémoire EPROM dont les cellules-mémoire sont constituées par des transistors MOS à grille flottante de type SAMOS (pour stacked gate avalanche injection MOS). Il est évident pour l'homme de l'art que la présente invention peut être utilisée avec d'autres technologies et d'autres types de mémoire EPROM ou EEPROM.

En général, dans les circuits intégrés du type carte à mémoire utilisant des mémoires non volatiles programmables électriquement de type EPROM, on n'utilise pas un seul signal-horloge CLK, mais deux signaux-horloge complémentaires CLK1 et CLK2 issus du signal-horloge CLK. Les signaux-horloge CLK1 et CLK2 sont obtenus en envoyant le signal-horloge externe CLK dans un diviseur D qui donne en sortie deux signaux CLK1 et CLK2 complémentaires.

Dans ce cas, le circuit de détection conform à la présente invention peut être du type de celui représenté sur la figure 2. Ce circuit de détection P est constitué de deux circuits identiques détectant chacun la présence ou l'absence d'un des signaux-horloge internes CLK1, CLK2 et dont les sorties sont envoyées sur une porte NON-ET 22. De manière plus spécifique, les signaux CLK1 et CLK2 obtenus en sortie du diviseur D à partir du signal-horloge externe CLK appliqué sur une des entrées du circuit intégré sont envoyés chacun sur les grilles 21′ et 21″ de transistors MOS formant interrupteur 19′ et 19″ des premier et second circuits identiques constituant avec la porte 22 le circuit de détection P. Le premier circuit est réalisé en montant en parallèle une capacité C′ avec une résistance réalisée par un transistor MOS 15′. Le transistor 15′ est constitué par un transistor déplété monté en charge , c'est-à-dire dont la grille 18′ est connectée à la source. La capacité C′ et le transistor 15′ sont montés entre la tension Vss formant la masse et le noeud commun N1′. D'autre part, le noeud N1′ est relié à la tension d'alimentation Vcc par l'intermédiaire du transistor MOS 19′ formant interrupteur, ce transistor MOS 19′ recevant sur sa grille 21′ le signal-horloge CLK1. La sortie du premier circuit est obtenue sur le noeud N1′et est envoyée sur une des entrées de la porte NON-ET 22. De même, le deuxième circuit comporte une capacité C″ et une résistance réalisée par un transistor MOS 15″ montés en parallèle. Le transistor 15″ est un transistor déplété monté en charge, c'est-à-dire dont la grille 18″ est connectée à la source. La capacité C″ et le transistor MOS 15″ sont connec-

tés entre la tension Vss formant la masse et le noeud commun N1″. Le noeud N1″ est connecté à la tension d'alimentation Vcc par l'intermédiaire du transistor MOS 19″ formant interrupteur, ce transistor MOS recevant sur sa grille 21″ le signal-horloge CLK2. D'autre part, le noeud N1″ formant la sortie du second circiut de détection est connecté sur l'autre entrée de la porte NON-ET 22.

Sur la figure 2, on a aussi représenté un circuit permettant d'inhiber l'écriture dans une mémoire non volatile programmable électriquement en utilisant le signal en sortie de la porte NON-ET 22. Ce circuit d'inhibition I est constitué par une porte NI 23 qui reçoit sur une de ses entrées le signal de sortie de la porte NON-ET 22 et sur son autre entrée le signal de commande de programmation inversé $\overline{PGM}$.

On expliquera maintenant le fonctionnement du circuit de la figure 2. En fait, les premier et second circuits inclus dans le circuit de détection P fonctionnement chacun de manière identique. Ainsi, lorsque les deux signaux CLK1 et CLK2 constitués par des impulsions sont présents, les capacités C′ et C″ se chargent régulièrement à chaque passage au niveau logique "1". On obtient au niveau des noeuds N1′ et N1″ une tension qui correspond sensiblement à un niveau logique "1". Par ailleurs, les charges présentes sur les capacités C′ et C″ sont évacuées en continu vers la tension Vss représentant la masse par l'intermédiaire des transistors 15′ et 15″ montés en charge. Pour éviter un basculement de la tension au niveau des noeuds N1′ et N1″ entre un niveau logique "1" et un niveau logique "0", la constante de temps de décharge des circuits constitués chacun par la capacité C′ ou C″ et le transistor MOS 15′ ou 15″ monté en charge est supérieure à la période des signaux-horloge CLK1 et CLK2. En conséquence, puisque les noeuds N1′ et N1″ sont au niveau logique "1", la sortie de la porte NON-ET 22 se trouve au niveau logique "0". De ce fait, en sortie de la porte NI 23 on obtient un signal correspondant au signal de commande de programmation $\overline{PGM}$. Si le signal-horloge CLK est absent, les deux signaux-horloge CLK1 et CLK2 ne sont plus des impulsions, mais des signaux stables et un des deux signaux-horloge CLK1 ou CLK2 se trouve à un niveau logique "0". En conséquence, un des transistors MOS interrupteurs 21′ ou 21″ est ouvert et la tension au niveau d'un des noeuds N1′ ou N1″ correspond à un niveau logique "0". Dans ce cas, la sortie de la porte NON-ET se trouve au niveau logique "1", ce qui entraîne un niveau logique "0" en sortie de la porte NI 23 quelque soit le niveau du signal $\overline{PGM}$. Il en résulte un blocage de l'écriture dans la mémoire non volatile programmable électriquement.

L'avantage du circuit décrit ci-dessus est d'interdire toute programmation aléatoire d'une mémoire non volatile programmable électriquement destinée principalement à recevoir des données confidentielles et cela dans le cas de fonctionnement en dehors des conditions normales de tension d'alimentation et de signaux-horloge. Ce circuit est d'autre part de conception très simple, nécessite peu de place et son fonctionnement est très fiable.

Il est évident pour l'homme de l'art que la présente invention peut s'appliquer à tout circuit intégré comportant des mémoires dont la programmation d'une cellule-mémoire est réalisée de la même manière que dans les EPROM ou EEPROM du type à transistor à grille flottante et dont les bornes des tensions d'alimentation et des signaux-horloge sont facilement accessibles de l'extérieur.

## Revendications

1. Un circuit intégré du type circuit logique comportant une mémoire non volatile programmable électriquement constituée d'une matrice de cellules-mémoire du type à transistor à grille flottante (1), de circuits d'écriture et de lecture (R, 11, 12, 13, L) et de moyens (6, 7, 8) gérant l'interconnexion de ces circuits avec la mémoire, le circuit intégré recevant une tension d'alimentation générale Vcc, une tension de programmation Vpp et un signal-horloge extérieur (CLK) agissant entre autre sur le fonctionnement des circuits d'écriture, caractérise en ce que le signal-horloge extérieure (CLK) est divisé en deux signaux-horloge internes complémentaires, (CLK1, CLK2) le circuit intégré comportant de plus un circuit (P) de détection de présence des signaux-horloge internes envoyant un signal interdisant l'écriture dans la mémoire lorsqu'il détecte l'absence d'un des signaux-horloge internes, le circuit (P) de détection étant constitué d'un premier circuit comportant une capacité (C') et une résistance (15') montées en parallèle entre la masse et un noeud commun (N1'), la capacité étant régulièrement chargée par l'intermédiaire d'un (CLK1) des deux signaux-horloge internes et d'un deuxième circuit comportant une capacité (C") et une résistance (15") montées en parallèle entre la masse et un noeud commun (N1"), la capacité (C") étant régulièrement chargée par l'intermédiaire de l'autre signal-horloge interne (CLK2), les noeuds communs étant reliés respectivement à chaque entrée d'une porte logique (22) dont la sortie fournit un signal logique de présence ou d'absence des signaux-horloge.

**2.** Circuit intégré selon la revendication 1, caractérisé en ce que la porte logique (22) est de type NON-ET.

**3.** Circuit intégré selon la revendication 1, caractérisé en ce que la résistance (15', 15") est constituée par un transistor MOS monté en charge.

**4.** Circuit intégré selon la revendication 3, caractérisé en ce que le transistor MOS monté en charge est constitué par un transistor MOS déplété dont la grille est connectée à une des électrodes principales.

**5.** Circuit intégré selon l'une quelconque des revendications 1 à 4 caractérisé en ce que le noeud commun (N', N") est connecté à la tension d'alimentation Vcc par l'intermédiaire d'un transistor MOS (19', 19") dont la grille reçoit le signal horloge (CLK1, CLK2).

**6.** Circuit intégré selon l'une quelconque des revendications 1 à 5, caractérisé en ce que la constante de décharge du circuit constitué par la capacité et la résistance est supérieure à la période du signal-horloge.

**7.** Circuit intégré selon l'une quelconque des revendications 1 à 6, caractérisé en ce que la sortie du circuit de détection (P) est connectée sur l'entrée d'une porte (23) dont l'autre entrée reçoit un signal essentiel ($\overline{PGM}$) à la commande d'écriture de manière à bloquer l'écriture si au moins un des signaux-horloge internes est absent.

**Claims**

**1.** An integrated circuit of the circuit logic type comprising an electrically programmable non-volatile memory constituted by a matrix of memory cells of the floating gate transistor (1) type, by write and read circuits (R, 11, 12, 13 and L) and by means (6, 7 and 8) for organizing the interconnection of these circuits with the memory, the integrated circuit receiving a general supply voltage Vcc, a programming voltage Vpp and an exterior clock signal (CLK) acting inter alia on the function of these write circuits, characterized in that the exterior clock signal (CLK) is split into two internal complementary clock signals (CLK1 and CLK2), the integrated circuit comprising furthermore a circuit (P) for the detection of the presence of internal clock signals sending a signal inhibiting writing to the memory when it detects the absence of one of the internal clock signals, the circuit (P) for detection being constituted by a first circuit comprising a capacitor (C') and a resistor (15') arranged in parallel between ground and a common connection (N1'), the capacitor being regularly charged by the intermediary of one (CLK1) of the two internal clock signals and a second circuit comprising a capacitor (C") and a resistor (15") arranged in parallel between ground and a common connection (N1"), the capacitor (C") being regularly charged by the intermediary of the other internal clock signal (CLK2), the common connections being united respectively with each input of a logic gate (22) whose output supplies a logic signal for the presence or absence of the clock signals.

**2.** The integrated circuit as claimed in claim 1, characterized in that the logic gate (22) is of the NOT-AND type.

**3.** The integrated circuit as claimed in claim 1, characterized in that the resistor (15' and 15") is constituted by an MOS transistor arranged in a load circuit.

**4.** The integrated circuit as claimed in claim 3, characterized in that the MOS transistor arranged in a load circuit is constituted by a depleted MOS transistor whose gate is connected with one of the main electrodes.

**5.** The integrated circuit as claimed in any one of the preceding claims 1 through 4, characterized in that the common connection (N' and N") is united with the supply voltage Vcc by the intermediary of an MOS transistor (19' and 19") whose gate receives the clock signal (CLK1 and CLK2).

**6.** The integrated circuit as claimed in any one of the preceding claims 1 through 5, characterized in that the discharge constant of the circuit constituted by the capacitor and the resistor is greater than the cycle of the clock signal.

**7.** The integrated circuit as claimed in any one of the preceding claims 1 through 6, characterized in that the output of the detection circuit (P) is connected with the input of a gate (23) whose other input receives an essential signal ($\overline{PGM}$) for the control of writing in such a manner that writing is inhibited if at least one of the internal clock signals is absent.

**Patentansprüche**

1. Eine integrierte Schaltung vom Typ einer Logikschaltung, mit einem elektrisch programmierbaren nichtflüchtigen Speicher, der aus einer Matrix von Speicherzellen eines Transistoren mit schwebendem Gate umfassenden Typs (1), aus Schreib- und Leseschaltungen (R, 11, 12, 13, L) und aus Mitteln (6, 7, 8), die die Verbindung dieser Schaltungen mit dem Speicher leiten, aufgebaut wird, wobei die integrierte Schaltung eine allgemeine Versorgungsspannung Vcc, eine Programmierungsspannung Vpp und ein externes Taktsignal (CLK), das unter anderem auf die Funktion der Schreibschaltungen einwirkt, empfängt, dadurch gekennzeichnet, daß das externe Taktsignal (CLK) in zwei komplementäre interne Taktsignale (CLK1, CLK2) unterteilt ist, wobei die integrierte Schaltung außerdem eine Schaltung (p) für die Erfassung des Vorliegens der internen Taktsignale umfaßt, die ein das Schreiben in den Speicher blockierendes Signal aussendet, wenn sie die Abwesenheit eines der internen Taktsignale erfaßt, wobei die Erfassungsschaltung (P) aufgebaut wird aus einer ersten Schaltung, die eine Kapazität (C') und einen Widerstand (15') umfaßt, die zwischen Masse und einem gemeinsamen Knoten (N1') parallel angebracht sind, wobei die Kapazität mittels eines (CLK1) der zwei internen Taktsignale regelmäßig aufgeladen wird, und aus einer zweiten Schaltung, die eine Kapazität (C") und einen Widerstand (15") umfaßt, die zwischen Masse und einem gemeinsamen Knoten (N1") parallel angebracht sind, wobei die Kapazität (C") mittels des anderen internen Taktsignals (CLK2) regelmäßig aufgeladen wird, wobei die gemeinsamen Knoten jeweils mit jedem der Eingänge eines logischen Gatters (22) verbunden sind, dessen Ausgang ein Logiksignal bezüglich des Vorliegens oder des Nichtvorliegens des Taktsignals liefert.

2. Integrierte Schaltung gemäß Anspruch 1, dadurch gekennzeichnet, daß das logische Gatter (22) vom NICHT-UND-Typ ist.

3. Integrierte Schaltung gemäß Anspruch 1, dadurch gekennzeichnet, daß der Widerstand (15', 15") von einem als Last geschalteten MOS-Transistor gebildet wird.

4. Integrierte Schaltung gemäß Anspruch 3, dadurch gekennzeichnet, daß der als Last geschaltete MOS-Transistor von einem MOS-Transistor vom Verarmungstyp gebildet ist, dessen Gate mit einer der Hauptelektroden verbunden ist.

5. Integrierte Schaltung gemäß einem der Ansprüche 1 bis 4, dadurch gekennzeichnet, daß der gemeinsame Knoten (N', N") über einen MOS-Transistor (19', 19"), dessen Gate das Taktsignal (CLK1, CLK2) empfängt, mit der Versorgungsspannung Vcc verbunden ist.

6. Integrierte Schaltung gemäß einem der Ansprüche 1 bis 5, dadurch gekennzeichnet, daß die Abklingkonstante der von der Kapazität und dem Widerstand gebildeten Schaltung größer als die Taktsignalperiode ist.

7. Integrierte Schaltung gemäß einem der Ansprüche 1 bis 6, dadurch gekennzeichnet, daß der Ausgang der Erfassungsschaltung (P) mit dem Eingang eines Gatters (23) verbunden ist, dessen anderer Eingang ein für die Steuerung des Schreibens wesentliches Signal ($\overline{PGM}$) empfängt, derart, daß der Schreibvorgang blockiert wird, wenn wenigstens eines der internen Taktsignale nicht vorliegt.

# FIG_1

# FIG_2